# EUROPEAN PATENT APPLICATION

(11) **EP 4 520 506 A1**
(43) Date of publication of application: **12.03.2025**
(21) Application number: 23819683.6
(22) Date of filing: 26.05.2023
(51) Int. Cl.: B29C 64/386, B29C 64/40, B33Y 30/00, B33Y 40/20, B33Y 50/00

(54) **MOLDING DATA GENERATION PROGRAM AND THREE-DIMENSIONAL MOLDING SYSTEM**

(30) Priority: 06.06.2022 JP 2022091507
(71) Applicant: BROTHER KOGYO KABUSHIKI KAISHA, Nagoya-shi, Aichi 467-8561 (JP)
(72) Inventor: YAZAWA Hiroaki, Nagoya-shi, Aichi 467-8562 (JP)
(74) Representative: Prüfer & Partner mbB Patentanwälte · Rechtsanwälte
(86) International application number: PCT/JP2023/019669
(87) International publication number: WO 2023/238701

(57) **Abstract**

Provided are an object forming data generation program and a three-dimensional object forming system that can generate data for forming a three-dimensional product and supports, which each extend in connection therewith and are easier to cut from the three-dimensional product than those in the related art.

A controller of a computer obtains three-dimensional data representing a three-dimensional shape of a three-dimensional product in accordance with an object forming data generation program (S30). The controller sets, based on the three-dimensional data, a plurality of supports to be connected to the three-dimensional product and a support member to be connected to each of the plurality of supports, such that, when viewed from a reference direction intersecting each of the plurality of supports, the support member is offset to a position outside the three-dimensional product and at which a length of each of the plurality of supports in a longitudinal direction thereof is a predetermined amount from an outer periphery of the three dimensional product (from S47 to S50). The controller generates three-dimensional object forming data for forming an object including the three-dimensional product, the plurality of supports, and the support member using a three-dimensional object forming apparatus (S51).

## Description

### TECHNICAL FIELD

The present invention relates to an object forming data generation program and a three-dimensional object forming system.

### BACKGROUND

A known three-dimensional product is manufactured by a stereolithographic apparatus that performs stereolithography based on three-dimensional object forming data and a numerical control (NC) machine that machines an object, formed by the stereolithographic apparatus, based on NC data (refer to, for example, Patent Literature 1). NC data is generated based on three-dimensional object forming data.

### Citation List

### Patent Literature

[Patent Literature 1] JP2003-136605A

### SUMMARY

### Technical Problem

The three-dimensional object forming data includes data for forming supports. The supports extend in connection with the three-dimensional product to regulate the position of the three-dimensional product during stereolithography. The supports are cut from the three-dimensional product, but may partially remain on the product, depending on the amount of deformation and deflection of the supports during cutting, which can lead to uneven cuts of the supports.

Provided are an object forming data generation program and a three-dimensional object forming system that can generate data for forming a three-dimensional product and supports, which extend in connection with a three-dimensional product and is easier to cut from the three-dimensional product than those in the related art.

### Solution to Problem

An object forming data generation program according to a first aspect of the present invention includes instructions to cause a controller of a computer to perform operations. The operations include a data obtaining step, a setting step, and a generating step. The data obtaining step is for obtaining three-dimensional data representing a three-dimensional shape of a three-dimensional product. The setting step is for setting, based on the three-dimensional data, a plurality of supports to be connected to the three-dimensional product and a support member to be connected to each of the plurality of supports, such that, when viewed from a reference direction intersecting each of the plurality of supports, the support member is offset to a position outside the three-dimensional product and at which a length of each of the plurality of supports in a longitudinal direction thereof is a predetermined amount from an outer periphery of the three-dimensional product. The generating step is for generating three-dimensional object forming data for forming an object including the three-dimensional product, the plurality of supports, and the support member, using a three-dimensional object forming apparatus.

The object forming data generation program of the first aspect can generate three-dimensional object forming data for forming an object with smaller variations in the length of the supports between the support member and the three-dimensional product as compared with the related art. The object forming data generation program thus reduces uneven cuts of the supports caused by variations in deformation and deflection of the supports during cutting as compared with the related art. This makes it easier to cut each of the supports from the three-dimensional product as compared with the related art.

A three-dimensional object forming system according to a second aspect of the present invention includes a data obtainer, a setter, and generator. The data obtainer obtains three-dimensional data representing a three-dimensional shape of a three-dimensional product. The setter sets, based on the three-dimensional data, a plurality of supports to be connected to the three-dimensional product and a support member to be connected to each of the plurality of supports, such that, when viewed from a reference direction intersecting each of the plurality of supports, the support member is offset to a position outside the three-dimensional product and at which a length of each of the plurality of supports in a longitudinal direction thereof is a predetermined amount from an outer periphery of the three-dimensional product. The generator generates three-dimensional object forming data for forming an object including the three-dimensional product, the plurality of supports, and the support member, using a three-dimensional object forming apparatus. The three-dimensional object forming system of the second aspect has the same effect as the object forming data generation program of the first aspect. The three-dimensional object forming system can further form an object according to the three-dimensional object forming data using a three-dimensional object forming apparatus.

### BRIEF DESCRIPTION OF THE DRAWINGS

FIG. 1 is a block diagram illustrating a configuration of a three-dimensional object forming system 9 including a 3D printer 11, a machining apparatus 12, and a data generation apparatus 1.
FIG. 2 is a flowchart of a data generation apparatus process to be executed by the data generation apparatus 1, a 3D printer process to be executed by the 3D printer 11, and a machining apparatus process to be executed by the machining apparatus 12 in the three-dimensional object forming system 9.
FIG. 3 is a flowchart of an object forming data generation process to be executed by the data generation apparatus 1.
FIG. 4 is an explanatory diagram of three-dimensional data 20, a three-dimensional product 40 represented by the three-dimensional data 20, and a setting screen 30 shown on a display 7.
FIG. 5A is a plan view of a three-dimensional product 40 represented by three-dimensional data 20 for a specific example.
FIG. 5B is a plan view of a three-dimensional product 61, which is the three-dimensional product 40 with a machining allowance 56, and pillars 71 to 74 set for the three-dimensional product 40.
FIG. 5C is a plan view of an outer periphery 60 of the three-dimensional product 61 and the pillars 71 to 74.
FIG. 6A is a plan view of the three-dimensional product 61, the pillars 71 to 74, and supports 81 to 86, 91 to 96 set for the three-dimensional product 40.
FIG. 6B is a plan view of an object 129 having the three-dimensional product 61, the pillars 71 to 74, the supports 81 to 86 and 91 to 96, and an outer frame 76 set for the three-dimensional product 40.
FIG. 6C is a plan view of the outer periphery 60 of the three-dimensional product 61, the pillars 71 to 74, the supports 81 to 86 and 91 to 96, the outer frame 76, and a first line 101 and a second line 102 set for the three-dimensional product 40.
FIG. 7A is a plan view of an object 130 having the three-dimensional product 61, the pillars 71 to 74, the supports 81 to 86 and 91 to 96, the outer frame 76, and a support member 100.
FIG. 7B is a plan view of an object 131, which is the object 130 from which the machining allowance 56 is removed, and to which a machining exclusion range 110 is set.
FIG. 7C is a plan view of an object 132, which is the object 130 from which the supports 81 to 86 and 91 to 96 between the support member 100 and the three-dimensional product 61 and the machining allowance 56 are removed, and to which the machining exclusion range 110 is set.
FIG. 7D is a plan view of an object 137, which is the object 130 from which the machining allowance 56 is removed based on NC data for a first specific example.
FIG. 7E is a plan view of an object 138, which is the object 130 from which the supports 81 to 86 and 91 to 96 between the support member 100 and the three-dimensional product 61 and the machining allowance 56 are removed based on NC data for a second specific example.
FIG. 8A is a perspective view of the three-dimensional product 40 represented by three-dimensional data 20 for the specific example.
FIG. 8B is a perspective view of the object 129 having the three-dimensional product 61, the pillars 71 to 74, the supports 81 to 86 and 91 to 96, and the outer frame 76 set for the three-dimensional product 40.
FIG. 8C is a perspective view of the object 130 having the three-dimensional product 61, the pillars 71 to 74, the supports 81 to 86 and 91 to 96, the outer frame 76, and the support member 100.
FIG. 9A is a cross-sectional view taken along line E1 - E1 in FIG. 6B, viewed in the direction of the arrow.
FIG. 9B is a cross-sectional view taken along line E2 - E2 in FIG. 7A, viewed in the direction of the arrow.
FIG. 9C is a cross-sectional view taken along line E3 - E3 in FIG. 7B, viewed in the direction of the arrow.
FIG. 9D is a view of a modification corresponding to the cross-sectional view taken along line E3 - E3 in FIG. 7B, viewed in the direction of the arrow.
FIG. 10A is a plan view of the three-dimensional product 40 represented by three-dimensional data 20 for the specific example.
FIG. 10B is a plan view of an object 134, in a first modified example, having the three-dimensional product 61, the pillars 71 to 74, the supports 81 to 86 and 91 to 96, the outer frame 76, and a support member 120.
FIG. 10C is a plan view of an object 135, in a second modified example, having the three-dimensional product 61, the pillars 71 to 74, the supports 81 to 86 and 91 to 96, the outer frame 76, and a support member 121.
FIG. 10D is a plan view of an object 136, in a third modified example, having the three-dimensional product 61, supports 181 to 186 and 191 to 196, and the support member 100.
FIG. 11 is a flowchart of a machining apparatus process to be executed by the machining apparatus 12.

### DETAILED DESCRIPTION

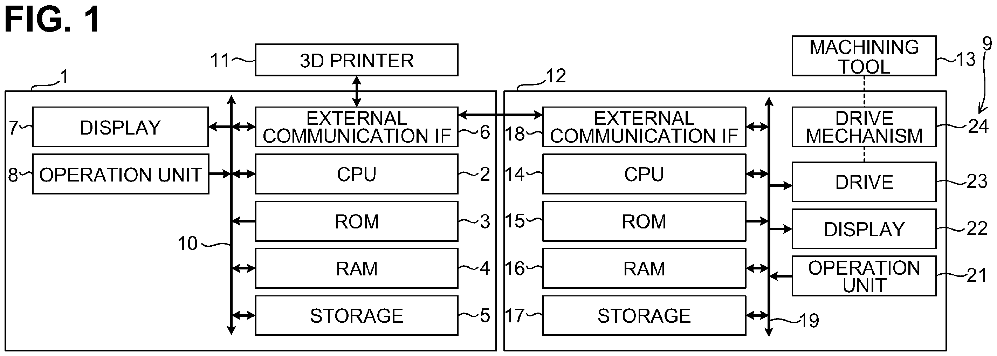

A three-dimensional object forming system 9 (hereinafter, simply referred to as "system 9") according to an embodiment of the present invention will be described in order with reference to the drawings. The configuration of the system 9 will be described with reference to FIG. 1. As shown in FIG. 1, the system 9 includes a three-dimensional (3D) printer 11, a machining apparatus 12, and a data generation apparatus 1. The 3D printer 11 is an apparatus capable of forming a three-dimensional object based on three-dimensional object forming data. The type of the 3D printer 11 may be any of a known powder bed melting type, a directional energy type, a binder jetting type, a sheet laminating type, a photopolymerization curing (stereolithography) type, a material extrusion type, a material jetting type, and other type, and is not particularly limited.

The machining apparatus 12 is an apparatus capable of machining a three-dimensional object into a predetermined shape using a machining tool 13 such as a cutting blade based on three-dimensional machining data. The machining apparatus 12 machines a three-dimensional object by, for example, moving the machining tool 13 relative to the three-dimensional object in a three-dimensional manner. The machining apparatus 12 includes a CPU 14, a ROM 15, a RAM 16, a storage 17, an external communication IF 18, a display 22, an operation unit 21, a drive 23, a drive mechanism 24, and a bus 19. The CPU 14 controls the machining apparatus 12, and is electrically connected to the ROM 15, the RAM 16, the storage 17, the external communication IF 18, the display 22, the operation unit 21, and the drive 23 via the bus 19. The ROM 15 stores a program executed by the CPU 14. The RAM 16 temporarily stores various data. The storage 17 is a nonvolatile storage device, and stores a program for controlling the operation of the machining apparatus 12 and various set values. The display 22 is a device for displaying an image, and is, for example, a liquid crystal display. The operation unit 21 is a device capable of inputting a signal corresponding to an operation by a user to the CPU 14. The external communication IF 18 connects the machining apparatus 12 to an external apparatus such as the data generation apparatus 1. The drive 23 includes an actuator such as a motor, and drives the drive mechanism 24 by driving the actuator. The drive mechanism 24 moves the machining tool 13 to a position indicated by NC data through the power of the drive 23. The NC data includes a plurality of movement coordinates of the machining tool 13 and specifies a tool path of the machining tool 13. The CPU 14 sequentially reads a plurality of movement coordinates included in the NC data and drives the drive 23 to move the machining tool 13 to the positions indicated by these movement coordinates.

The data generation apparatus 1 is a known personal computer, and can generate three-dimensional object forming data and three-dimensional machining data based on three-dimensional data representing the shape of a three-dimensional product by executing an object forming data generation program described later. The data generation apparatus 1 includes a CPU 2, a ROM 3, a RAM 4, a storage 5, an external communication IF 6, a display 7, an operation unit 8, and a bus 10. The CPU 2 controls the data generation apparatus 1, and is electrically connected to the ROM 3, the RAM 4, the storage 5, the external communication IF 6, the display 7, and the operation unit 8 via the bus 10. The ROM 3 stores a program executed by the CPU 2. The RAM 4 temporarily stores various data. The storage 5 is a nonvolatile storage device, and stores a program for controlling the operation of the data generation apparatus 1 and various set values. The display 7 is a device for displaying an image, and is, for example, a liquid crystal display. The operation unit 8 is a device capable of inputting a signal corresponding to an operation by the user to the CPU 2. The operation unit 8 is, for example, at least one of a keyboard, a mouse, a touch panel, and a joystick. The external communication IF 6 connects the data generation apparatus 1 to external devices such as the 3D printer 11 and the machining apparatus 12.

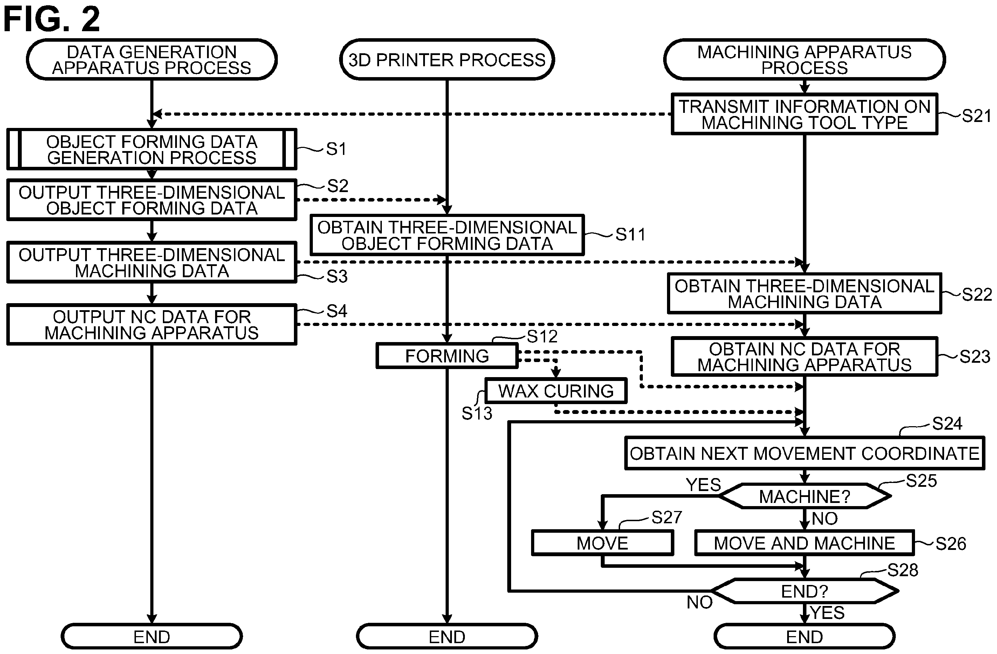

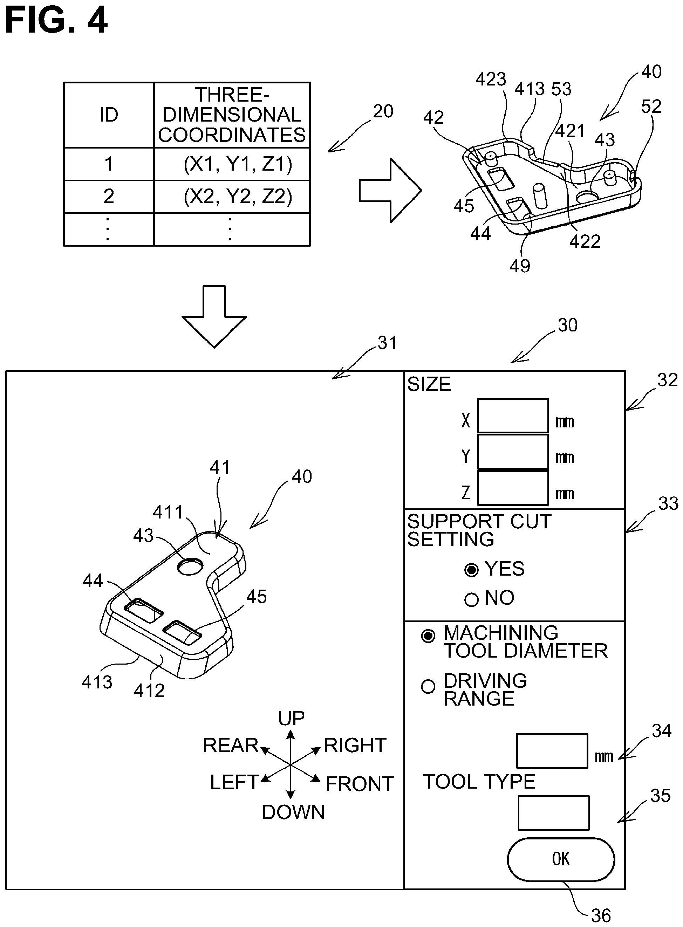

Referring to FIGS. 2 to 9, the data generation apparatus process to be executed by the CPU 2 of the data generation apparatus 1 of the system 9, the 3D printer process to be executed by the 3D printer 11, and the machining apparatus process to be executed by the CPU 14 of the machining apparatus 12 will be described in order. As an example, a case will be described in which each process is executed in a state in which three-dimensional data 20 representing a three-dimensional product 40 shown in FIG. 4 is designated. The three-dimensional data 20 is generated by a device such as a three-dimensional CAD, a three-dimensional modeler, or a three-dimensional scanner, and can be in any format such as the Standard Triangulated Language (STL) format, the Initial Graphics Exchange Specification (IGES) format, the Standard for the Exchange of Product Model Data (STEP) format, or the Additive Manufacturing (AMF) format. The three-dimensional data 20 may be generated by the data generation apparatus 1 or by an external device.

As shown in FIG. 4, the three-dimensional product 40, in this specific example, is, for example, a three-dimensional object that is convex toward one side and has a predetermined thickness as a whole, and includes a convex surface 41, a concave surface 42, and notches 52 and 53. The convex surface 41 includes a flat surface portion 411, a side surface portion 412, and an outer peripheral edge portion 413. The flat surface portion 411 extends flat. The flat surface portion 411 of the three-dimensional product 40 has holes 43 to 45 extending through in the thickness direction. The hole 43 is circular, and the holes 44 and 45 are rectangular. The side surface portion 412 is connected to the outer periphery of the flat surface portion 411, and extends in a direction intersecting the extending surface of the flat surface portion 411 and in a direction away from the center of the flat surface portion 411 as the side surface portion 412 is further away from the flat surface portion 411. The outer peripheral edge portion 413 is an end portion of the side surface portion 412 opposite to the flat surface portion 411. The concave surface 42 is a surface opposite to the convex surface 41. The concave surface 42 includes a flat surface portion 421 corresponding to the flat surface portion 411, a side surface portion 422 corresponding to the side surface portion 412, and an inner peripheral edge portion 423 corresponding to the outer peripheral edge portion 413. The notches 52 and 53 are portions formed from the edge portions 413 and 423 of the side surface portions 412 and 422, extending toward the flat surface portion 421.

The data generation apparatus process shown in FIG. 2, which is executed by the data generation apparatus 1, is started when an instruction to start the process is detected via the operation unit 8 and then the CPU 2 reads the object forming data generation program stored in the storage 5 to the RAM 4. The following describes the data generation apparatus process to be executed for first and second specific examples in parallel with each other, which differ in settings of an object to be formed and timings of the processes. In the following description, when a three-dimensional object (for example, a support) is added to and set for the three-dimensional product 40, three-dimensional data representing the three-dimensional shape of the set three-dimensional object may be added to the three-dimensional data 20 for the three-dimensional product 40, or may be generated separately from the three-dimensional data 20 and stored in association with the three-dimensional data 20. Various set values referred to in the data generation apparatus process may be set in advance. Alternatively, a predetermined value may be automatically selected from among a plurality of types of values based on the shape, size, and other characteristics of the three-dimensional product 40, or may be set by the user through the operation unit 8.

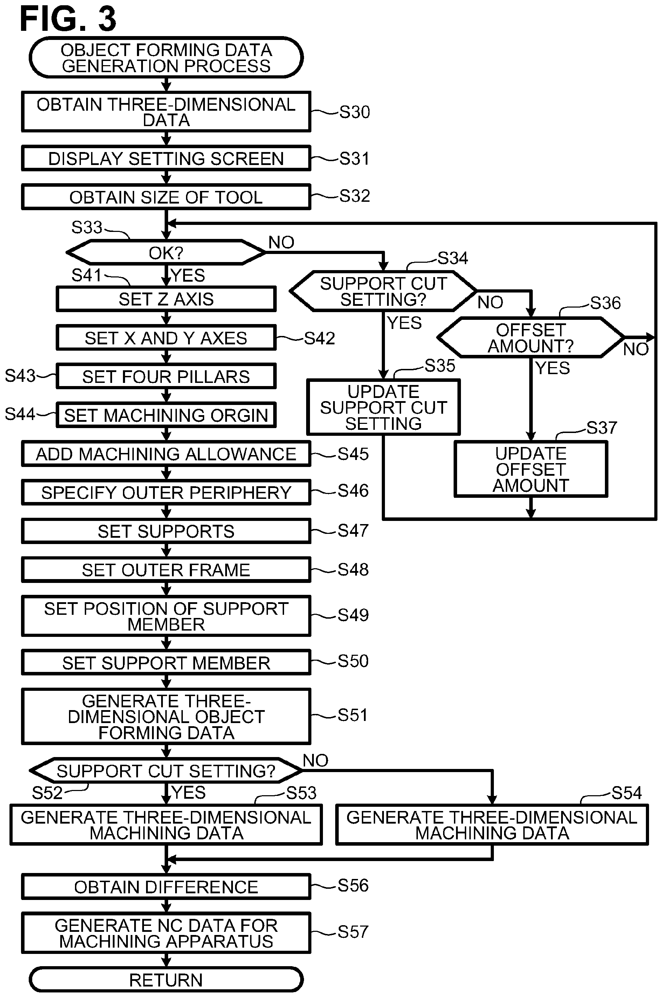

As shown in FIG. 2, the CPU 2 executes an object forming data generation process (S1). As shown in FIG. 3, in the object forming data generation process, the CPU 2 obtains three-dimensional data 20 representing the three-dimensional shape of the three-dimensional product 40 (S30). As an example, the CPU 2 obtains the three-dimensional data 20 in the STL format schematically shown in FIG. 4 from an external device via wired or wireless connection. The three-dimensional data 20 in the STL format includes three-dimensional coordinate data of the vertices of a group of triangles representing the three-dimensional shape of the three-dimensional product 40.

As shown in FIG. 4, the CPU 2 shows a setting screen 30 related to the three-dimensional data 20 obtained in S30 on the display 7 (S31). The setting screen 30 includes sections 31 to 35 and a key 36. The section 31 displays the three-dimensional shape of the three-dimensional product 40 based on the three-dimensional data 20 obtained in S30. In an initial state, the CPU 2 displays the three-dimensional shape of the three-dimensional product 40 in the section 31, with the X direction, the Y direction, and the Z direction of the three-dimensional data 20 as the left-right direction, the front-rear direction, and the up-down direction, respectively. The X direction, the Y direction, and the Z direction may be changeable or unchangeable. In the present embodiment, the positive X direction corresponds to the right side, the positive Y direction corresponds to the rear side, and the negative Z direction corresponds to the upper side. The section 32 displays the overall size of the three-dimensional product 40 in the X, Y, and Z directions based on the three-dimensional data 20 obtained in S30. Although not shown, the CPU 2 sets initial values for the sections 33 to 35 of the setting screen 30. The initial values may be set as appropriate, and may be preset values or values specified by the user. The initial values may be values from the last time the process in S31 was executed. The section 33 is used to select whether to cut one end of multiple supports in the longitudinal direction. In this embodiment, the supports are connected to the three-dimensional product 40 and a support member, and the user can select whether to cut one end of the supports that are connected to the three-dimensional product 40 using the machining apparatus 12. For example, when the three-dimensional product 40 is supported by the curing agent such as wax applied to the inside of a support member 100, the user sets a support cut setting in the section 33 to "YES". For example, when the three-dimensional product 40 is not supported by the curing agent, the user sets the support cut setting in the section 33 to "NO". The support member has a shape that is offset to a position outside the three-dimensional product 40 and at which the length of each of the supports in the longitudinal direction is a predetermined amount from the outer periphery of the three-dimensional product 40, when viewed from a reference direction intersecting each of the supports. The reference direction of this example is the positive Z direction, which corresponds to the upper side. The shape of the support member when viewed from the reference direction includes curved portions along the outer periphery of the three-dimensional product 40. The longitudinal direction of each of the supports of the present embodiment is the X direction, and the support member is a looped frame along the outer periphery of the three-dimensional product 40 when viewed from the reference direction.

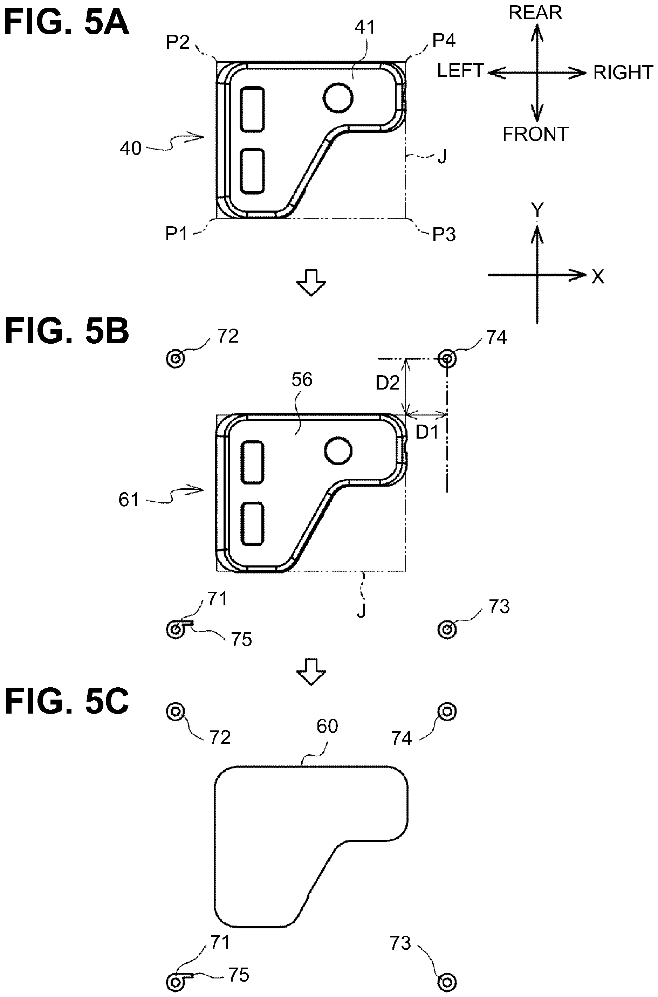

The sections 34 and 35 are used for specifying setting conditions of the support member. The section 34 is used to input a numerical value of an offset amount, which is specified in the process in S46 described later, when the offset is made from the outer periphery 60 (refer to FIG. 5C) of the three-dimensional product 40 outside the three-dimensional product 40. A value indicating the size of the machining tool 13 or a range of machining by the machining tool 13 is input in the section 34. The size of the machining tool 13 is, for example, the diameter of the machining tool 13. The range of machining by the machining tool 13 is larger than the size of the machining tool 13. When the machining tool 13 is a drill blade, the size of the machining tool 13 is expressed as the diameter of the drill blade, and the range of machining by the machining tool 13 is expressed as a range to be machined when the drill blade is rotationally driven at the same position. The range of machining by the machining tool 13 may be expressed as an actually measured value, or may be expressed as a value obtained by adding a value corresponding to the type of the machining tool 13 to the size of the machining tool 13. The section 35 is used to input the type of the machining tool 13 as information for specifying the size of the machining tool 13 used in the process of machining the three-dimensional product 40. The type of the machining tool 13 may be input by the user through the operation unit 8, or information representing the type of the machining tool 13 may be obtained from the machining apparatus 12 via a wired or wireless connection. The relationships between the types and sizes of machining tools 13 are stored in the storage 5 in advance. The CPU 2 sets the size of the machining tool 13 or the range of machining by the machining tool 13 larger than the size of the machining tool 13 as an offset amount, based on the inputted type of the machining tool 13, the corresponding relationship stored in the storage 5, and the setting in the section 34. The key 36 is selected when the setting of the conditions using the setting screen 30 is confirmed. When receiving the information indicating the type of the machining tool 13 from the machining apparatus 12, the CPU 2 obtains the received information and updates the section 35 (S32).

The CPU 2 accepts changes in various settings via the setting screen 30 in S33 to S37. The CPU 2 determines whether the selection of the key 36 is detected based on the output of the operation unit 8 (S33). When the selection of the key 36 is not detected (S33: NO), the CPU 2 determines whether an input to the support cut setting in the section 33 is detected based on the output of the operation unit 8 (S34). When the input to the support cut setting is detected (S34: YES), the CPU 2 updates the support cut setting according to the output of the operation unit 8 (S35), and returns the process to S33. When the input to the support cut setting is not detected (S34: NO), the CPU 2 determines whether the input to the section 34 or the section 35 for setting an offset amount is detected based on the output of the operation unit 8 (S36). When the input of the offset amount in the section 34 or the section 35 is detected (S36: YES), the CPU 2 updates the setting of the offset amount in accordance with the output of the operation unit 8 (S37). When the input of the offset amount is not detected (S36: NO), or after S37, the CPU 2 returns the process to S33. In the first specific example, the section 33 indicates that the support cut setting is set to "NO", and the section 34, 35 indicates the size of the machining tool 13. In the second specific example, the section 33 indicates that the support cut setting is set to "YES", and the section 34, 35 indicates the range of machining by the machining tool 13.

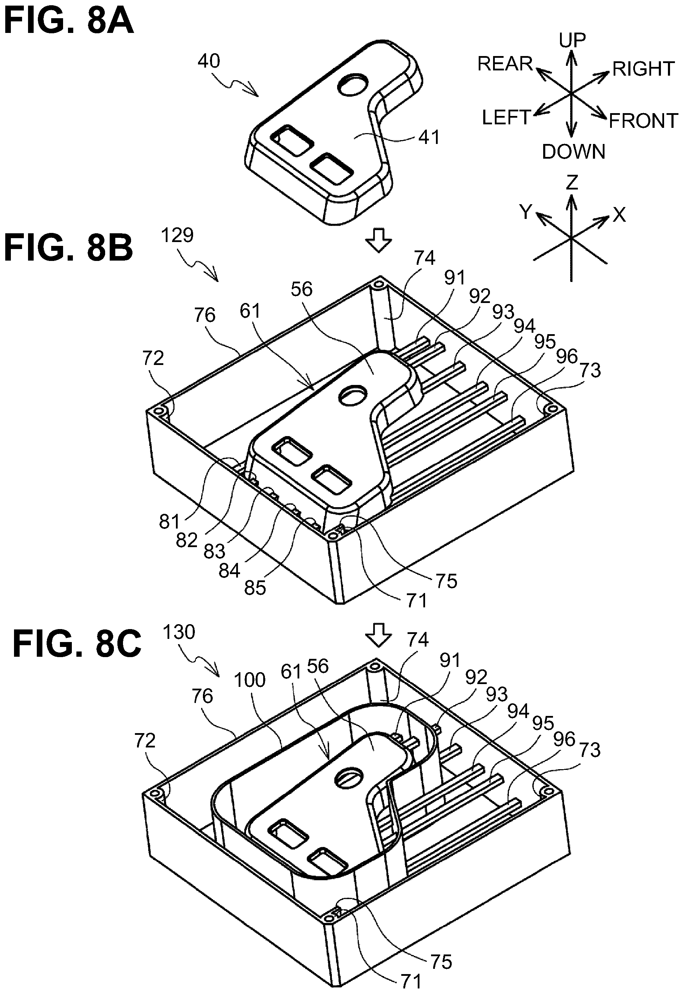

In the first and second specific examples, when the selection of the key 36 is detected in S33 (S33: YES), the CPU 2 generates three-dimensional object forming data and three-dimensional machining data based on the setting of the setting screen 30 and outputs the generated data. Specifically, the CPU 2 sets a new Z axis based on the setting on the setting screen 30 (S41). The CPU 2 sets new X and Y axes (S42). As shown in FIGS. 5A and 8A, the CPU 2 sets the longitudinal direction of the projected figure to be the new X axis and the lateral direction of the projected figure to be the new Y axis when the three-dimensional product 40 is projected from the positive Z direction set in S41 onto a virtual XY plane perpendicular to the Z axis. The CPU 2 converts the three-dimensional data 20 obtained in S30 based on the new X axis, Y axis, and Z axis set in S41 and S42.

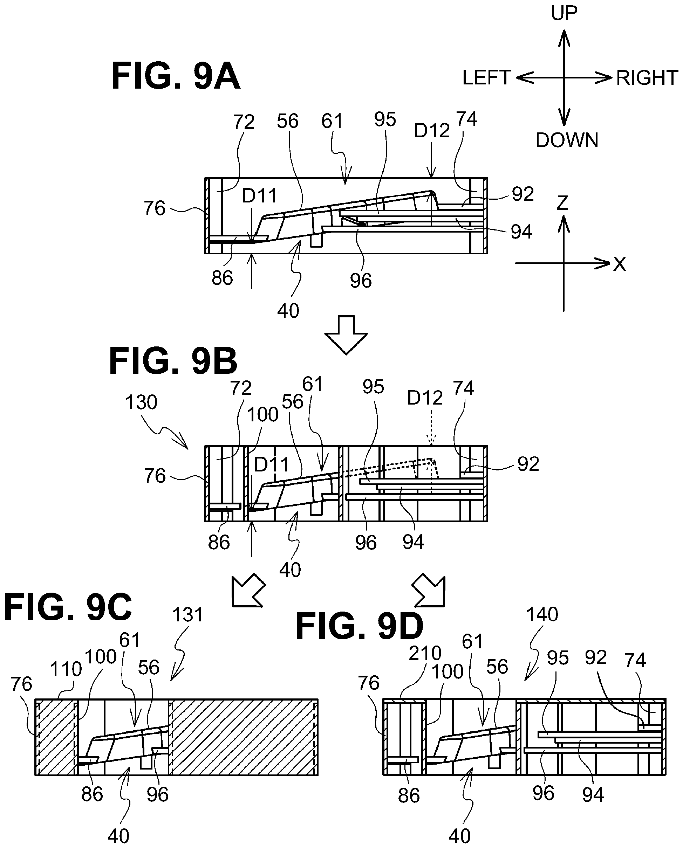

As shown in FIG. 5B, the CPU 2 sets four pillars 71 to 74 with respect to the three-dimensional product 40 based on the three-dimensional data 20 converted in accordance with the new X axis, Y axis, and Z axis (S43). The four pillars 71 to 74 extend in the Z direction at positions away from the three-dimensional product 40, and are used for positioning the three-dimensional product 40 during three-dimensional forming by the 3D printer 11. The four pillars 71 to 74 are circular cylinders having a predetermined radius. The CPU 2 sets the four pillars 71 to 74 with respect to the three-dimensional product 40 in the following procedure, for example. The CPU 2 defines a minimum rectangular parallelepiped J that inscribes the three-dimensional product 40 based on the minimum and maximum values of the X coordinate, the Y coordinate, and the Z coordinate from the converted three-dimensional data 20. The rectangular parallelepiped J has two planes parallel to an XY plane, two planes parallel to a YZ plane, and two planes parallel to a ZX plane. The CPU 2 sets points each separated from a corresponding one of the four vertices P1 to P4, which are on a plane parallel to the XY plane, in a direction away from the center of the three-dimensional product 40 by a predetermined distance D1 in the X direction and a predetermined distance D2 in the Y direction, at the positions of the axes of the four pillars 71 to 74. The coordinates (X, Y) of the four vertices P1 to P4 are as follows: P1 is (the minimum value of the X coordinate, the minimum value of the Y coordinate), P2 is (the minimum value of the X coordinate, the maximum value of the Y coordinate), P3 is (the maximum value of the X coordinate, the minimum value of the Y coordinate), and P4 is (the maximum value of the X coordinate, the maximum value of the Y coordinate). As shown in FIG. 9A, the CPU 2 sets the lower end of a range of extension for each of the four pillars 71 to 74 in the Z direction at a position that is a predetermined distance D11 below the lower end of the three-dimensional product 40, and sets the upper end of the range of extension at a position that is a predetermined distance D12 above the upper end of the three-dimensional product 40. The shape, arrangement, size, and the range of extension for each of the pillars 71 to 74 set in S43 may be changed as appropriate.

The CPU 2 sets a machining origin (S44). The machining origin is the mechanical origin used as a reference when an object is formed with the 3D printer 11, and it is also the mechanical origin used as a reference when the object is machined with the machining apparatus 12. The machining origin of the 3D printer 11 and the machining origin of the machining apparatus 12 may differ from each other. The CPU 2 sets the position of one of the four pillars 71 to 74 set in S43, for example, the pillar 71, as the machining origin. The position of the pillar 71 is set in the negative X direction and the negative Y direction with respect to the three-dimensional product 40. The CPU 2 adds a plate-like portion 75 to the pillar 71 as a mark for the machining origin. The plate-like portion 75 has a predetermined length in the positive X direction from the pillar 71 and a predetermined length in the positive Y direction from the axis of the pillar 71.

The CPU 2 adds a machining allowance 56 including a predetermined thickness to the entire convex surface 41, which is a machined surface facing in the positive Z direction of the three-dimensional product 40 (S45). The predetermined thickness may be set by the user or may be automatically set in accordance with the size of the three-dimensional product 40. The three-dimensional product 40 to which the machining allowance 56 is added is simply referred to as a three-dimensional product 61. The CPU 2 specifies a curved outer periphery 60 of the three-dimensional product 40 when viewed from the reference direction, which is from above (S46). As shown in FIG. 5C, the curved outer periphery 60 of the three-dimensional product 40, when viewed from the reference direction, is the contour of its projection onto the virtual XY plane perpendicular to the Z axis. The method of specifying the outer periphery 60 may be set as appropriate, and may be set based on, for example, the X coordinate and the Y coordinate of the three-dimensional data 20.

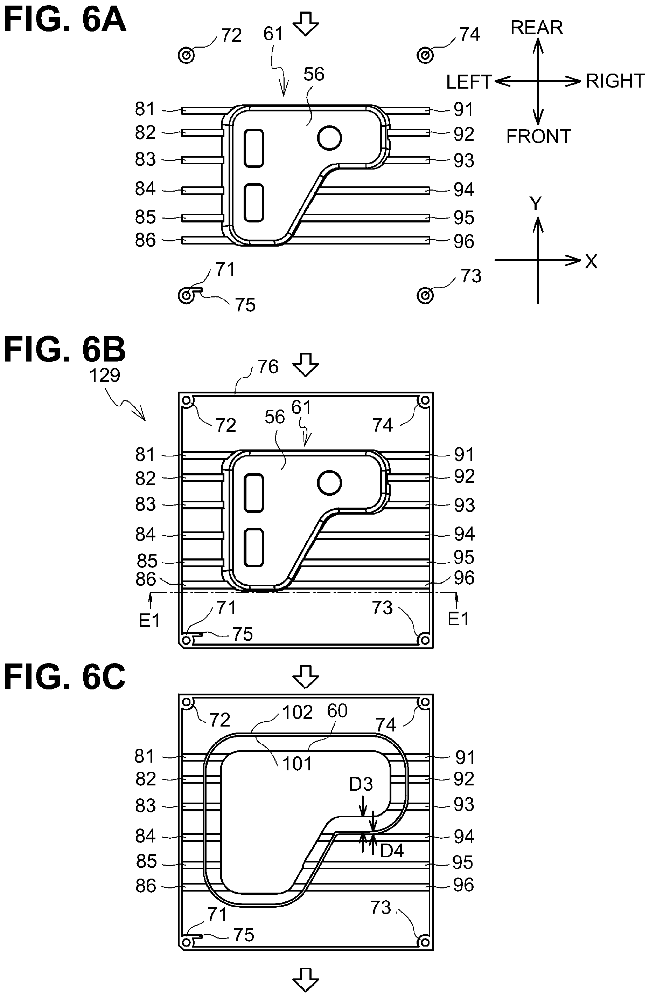

As shown in FIG. 6A, the CPU 2 sets supports 81 to 86 and 91 to 96 (S47). The plurality of supports set in S47 are square prisms arranged with longitudinal directions set according to predetermined arrangement conditions. One end of each support in the longitudinal direction is connected to the machining allowance 56 added to the three-dimensional product 40. The predetermined arrangement conditions may be set by the user or may be automatically set in accordance with the shape or size of the three-dimensional product 61. In the present embodiment, the arrangement conditions are automatically set regardless of the shape or size of the three-dimensional product 61, and include the lengths of the supports in the longitudinal, width, and height directions, and the intervals between adjacent supports. The CPU 2 of the present embodiment automatically sets the arrangement conditions based on the XYZ coordinate system set in S41 and S42, sets the X direction to the longitudinal direction of the supports, sets the Y direction to the width direction of the supports, and sets the Z direction to the height direction of the supports. During the process in S47, the supports 81 to 86, which extend in the negative X direction with respect to the three-dimensional product 61, and the supports 91 to 96, which extends in the positive X direction with respect to the three-dimensional product 61, are set. The supports 81 to 86 and 91 to 96 abut the outer peripheral edge of the three-dimensional product 61, forming its outer periphery.

The CPU 2 sets an outer frame 76 with respect to the three-dimensional product 61 (S48). The outer frame 76 is a frame set for the support member 100 described later, outside the three-dimensional product 40, when viewed from the reference direction. The outer frame 76 may be polygonal when viewed from the reference direction, and the method of setting the outer frame 76 may be set appropriately. The CPU 2 of the present embodiment sets a rectangular outer frame 76 connecting the pillars 71 to 74 when viewed from the reference direction. The range of extension for the outer frame 76 in the Z direction is the same as that for the pillars 71 to 74. That is, as shown in FIG. 9A, the lower end of the outer frame 76 is located a distance D11 below the lower end of the three-dimensional product 40, and the upper end of the outer frame 76 is located a distance D12 above the upper end of the three-dimensional product 40. As shown in FIGS. 6B and 8B, an object 129 having the three-dimensional product 61, the pillars 71 to 74, the supports 81 to 86 and 91 to 96, and the outer frame 76 is set through the process in S48.

The CPU 2 sets the position of the support member 100 to be formed on the XY plane (S49). The CPU 2 sets the position of the support member 100 to be formed on the XY plane, for example, in the following manner. The CPU 2 sets a first line 101 that is offset to a position outside the three-dimensional product 40 and at which the length of each of the supports 81 to 86 and 91 to 96 in the longitudinal direction is a predetermined amount from the curved outer periphery (60) of the three-dimensional product 40 specified in S46, when viewed from the reference direction. The CPU 2 of the present embodiment sets the support member 100 that is offset by a predetermined amount outside the outer periphery 60 of the three-dimensional product 40 in a direction perpendicular to the reference direction when viewed from the reference direction. That is, the offset amount from the outer periphery 60, when viewed from the reference direction, is the same value in a direction perpendicular to the reference direction. The predetermined amount is an offset amount corresponding to the initial value set in S31, the size of the machining tool 13 obtained in S32, or the size of the machining tool 13 updated in S37. As shown in FIG. 6C, in the present embodiment, the CPU 2 sets the first line 101 representing the inner periphery of the support member 100 as a shape of the support member 100 on the XY plane based on the same offset amount in the X direction and the Y direction. The CPU 2 further sets a second line 102 offset outward from the first line 101 by the thickness of the support member 100.

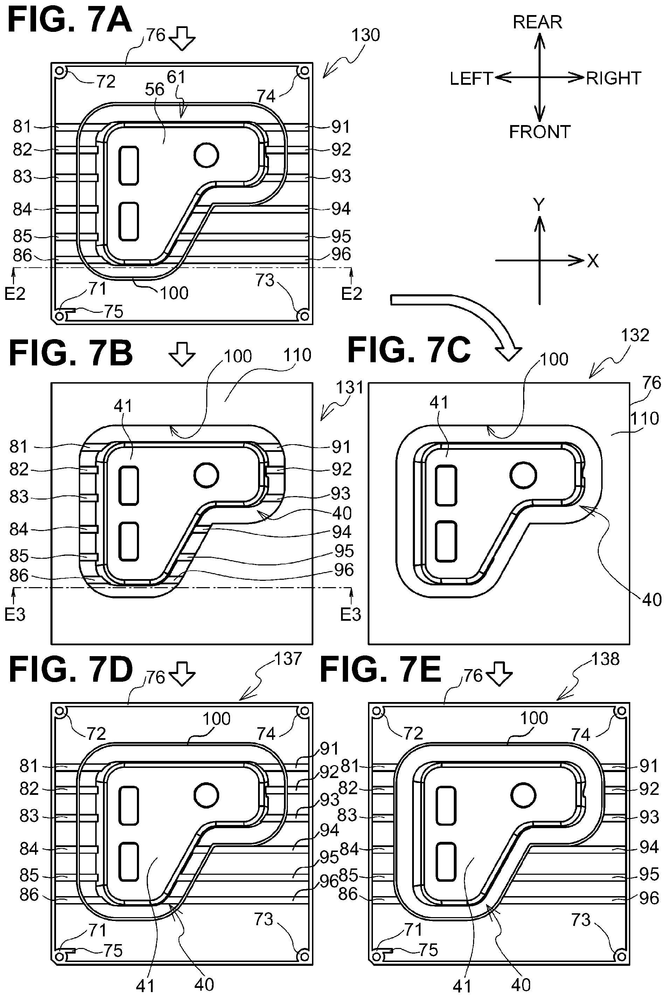

The CPU 2 sets the support member 100, with its inner periphery defined by the first line 101, its outer periphery defined by the second line 102, and its range of extension in the Z direction being the same as that of each of the pillars 71 to 74 (S50). As shown in FIG. 9B, the lower end of the support member 100 is located the distance D11 below the lower end of the three-dimensional product 40, and the upper end of the support member 100 is positioned the distance D12 above the upper end of the three-dimensional product 40. As shown in FIGS. 7A and 8C, the three-dimensional product 61 is disposed inside the support member 100 when viewed from the reference direction. The support member 100 intersects each of the supports 81 to 86 and 91 to 96. That is, each of the supports 81 to 86 and 91 to 96 intersects the support member 100 between its left end and right end. Through the process in S50, an object 130 having the three-dimensional product 61, the pillars 71 to 74, the supports 81 to 86 and 91 to 96, the outer frame 76, and the support member 100 is set.

In the first and second specific examples, the CPU 2 generates three-dimensional object forming data for forming the object 130 with the 3D printer 11 (S51). The three-dimensional object forming data for each of the first and second examples include data for forming the object 130, that is, data representing three-dimensional shapes of the three-dimensional product 40, the four pillars 71 to 74 set in S43, the plate-like portion 75 added in S44, the machining allowance 56 added in S45, the supports 81 to 86 and 91 to 96 set in S47, the outer frame 76 set in S48, and the support member 100 set in S50.

The CPU 2 determines whether the support cut setting is set to "YES" (S52). For the first specific example, the CPU 2 determines that the support cut setting is set to "NO" (S52: NO), and generates three-dimensional machining data for which the right ends of the supports 81 to 86 and the left ends of the supports 91 to 96 are not cut (S54). In the present embodiment, the CPU 2 sets an area between the support member 100 and the outer frame 76, when viewed from the reference direction, as a machining exclusion area 110 in which no machining with the machining apparatus 12 is performed, and then generates three-dimensional machining data. Specifically, as shown in FIG. 7B, the CPU 2 generates, as the three-dimensional machining data for the first specific example, data representing the three-dimensional shape of an object 131, which is the object 130 from which the machining allowance 56 is machined and removed using the machining apparatus 12 and to which an area between the support member 100 and the outer frame 76 is set as the machining exclusion range 110. The machining exclusion range 110 is data indicating that no machining with the machining apparatus 12 is performed. For example, as shown in FIG. 7B, the CPU 2 of the present embodiment sets the machining exclusion range 110, in which no machining with the machining apparatus 12 is performed, by filling the area between the support member 100 and the outer frame 76 with an object.

For the second specific example, the CPU 2 determines that the support cut setting is set to "YES" (S52: YES), and generates three-dimensional machining data for which the right ends of the supports 81 to 86 and the left ends of the supports 91 to 96 are cut (S53). The CPU 2 sets the machining exclusion range 110 as in S54, to generate three-dimensional machining data. Specifically, as shown in FIG. 7C, the CPU 2 generates, as the three-dimensional machining data for the second specific example, data representing the three-dimensional shape of an object 132, which is the object 130 from which the machining allowance 56 and the supports 81 to 86 and 91 to 96 are machined and removed using the machining apparatus 12 and to which the area between the support member 100 and the outer frame 76 is set as the machining exclusion range 110.

The CPU 2 obtains the difference between the three-dimensional machining data generated in S51 and the three-dimensional machining data generated in S53 or S54 (S56). In the present embodiment, since the CPU 2 sets the machining exclusion range 110 in S53 and S54, no difference is obtained for the machining exclusion range 110. In the first specific example, the CPU 2 obtains data representing the three-dimensional shape of the machining allowance 56. In the second specific example, the CPU 2 obtains data representing the three-dimensional shapes of the machining allowance 56 and the portions of the supports 81 to 86 and 91 to 96 located between the support member 100 and the three-dimensional product 61. The CPU 2 generates NC data for machining the object 130 by using the machining apparatus 12 based on the difference obtained in S56 (S57). The CPU 2 ends the data generation process, and returns the process to the data generation apparatus process.

After S1, the CPU 2 outputs the three-dimensional object forming data generated in S54 to the 3D printer 11 (S2). The CPU 2 outputs the three-dimensional machining data generated in S55 and the NC data for the machining apparatus 12 generated in S57, to the machining apparatus 12 (S3, S4). The CPU 2 ends the data generation apparatus process.

Referring to FIG. 2, a 3D printer process to be executed by a controller of the 3D printer 11 in the system 9 will be described. The 3D printer 11 obtains the three-dimensional object forming data output from the data generation apparatus 1 in S2 (S11). The 3D printer 11 performs a process of forming a three-dimensional object based on the three-dimensional object forming data obtained in S11 (S12). Through the process in S12, the object 130 is formed in both the first and second specific examples. The 3D printer 11 ends the 3D printer process.

Referring to FIG. 2, a machining apparatus process to be executed by the CPU 14 of the machining apparatus 12 in the system 9 will be described using the second specific example. This process is similarly applied to the first embodiment. In the second specific example, the user places the object 130 formed by the 3D printer 11 on a horizontal table, fills the inside of the support member 100 with a curing agent having fluidity, such as wax, and allows the curing agent to cure (S13). Since the lower end of the support member 100 abuts against the table, the curing agent is applied to the space surrounded by the inner periphery of the support member 100 and the table. The curing agent is preferably applied to a level higher than the upper end of the three-dimensional product 61 to ensure the three-dimensional product 61 is fully covered. After the curing agent is cured, the user fixes the object 130 to a predetermined position of the machining apparatus 12. In the first specific example, the process in S13 is omitted, and the user fixes the object 130 to a predetermined position of the machining apparatus 12.

The CPU 14 of the machining apparatus 12 transmits information indicating the type of the machining tool 13 currently attached to the data generation apparatus 1 via wired or wireless connection (S21). The CPU 14 obtains the three-dimensional machining data output from the data generation apparatus 1 in S3 (S22). The CPU 14 obtains the NC data output from the data generation apparatus 1 in S4 (S23). The CPU 14 obtains movement coordinates included in the NC data in the reading order (S24), and determines whether to machine the three-dimensional product 40 in each of the movement coordinates obtained in S24 (S25). The CPU 14 determines whether to machine the three-dimensional product 40 based on the size of the machining tool 13 or the amount corresponding to the range of machining by the machining tool 13 when driven, and the object 132 after machining, which is represented by the three-dimensional machining data. When determining to machine the three-dimensional product 40 (S25: YES), the CPU 14 does not machine a portion of interest corresponding to a movement coordinate of interest (S27). Specifically, the CPU 14 controls the drive 23 to move the machining tool 13 upward from its current position to a position above the object 130, and then to a position indicated by the X and Y coordinates of the movement coordinate of interest. When determining not to machine the three-dimensional product 40 (S25: NO), the CPU 14 moves the machining tool 13 to a position indicated by the movement coordinate of interest obtained in S24, and controls the machining of the portion of interest corresponding to the movement coordinate of interest (S26). After S26 or S27, the CPU 14 determines whether the movement coordinate obtained in S24 is the last data record included in the NC data obtained in S23 (S28). When the movement coordinate obtained in S24 is not the last data record (S28: NO), the CPU 14 returns the process to S24.

As shown in FIG. 7E, in the second example, an object 138 including the three-dimensional product 40 is obtained by machining the object 130 shown in FIG. 7A in accordance with the NC data. The object 138 is obtained by machining the machining allowance 56 of the object 130 and the supports 81 to 86 and 91 to 96 between the support member 100 and the three-dimensional product 40. The three-dimensional product 40 is supported from below by a curing agent inside the support member 100. In the object 138, the supports 81 to 86 and 91 to 96 between the support member 100 and the three-dimensional product 40 are cut. As shown in FIG. 7D, in the first example, an object 137 including the three-dimensional product 40 is obtained by machining the object 130 in accordance with the NC data. The object 137 is obtained by machining the machining allowance 56 of the object 130. In the object 137, the supports 81 to 86 and 91 to 96 between the support member 100 and the three-dimensional product 40 remain uncut. The three-dimensional product 40 is supported by supports 81 to 86 and 91 to 96. When the movement coordinate obtained in S24 is the last data record (S28: YES), the CPU 14 ends machining apparatus process.

In the data generation apparatus 1 and the system 9 of the above embodiment, the data generation apparatus 1, the CPU 2, the 3D printer 11, the machining apparatus 12, and the machining tool 13 are examples of a computer, a controller, a three-dimensional object forming apparatus, a machining apparatus, and a machining tool of the present invention, respectively. The three-dimensional product 40, the convex surface 41, the machining allowance 56, the outer frame 76, and the support member 100 are examples of a three-dimensional product, a surface to be machined, a machining allowance, an outer frame, and a support member of the present invention, respectively. The supports 81 to 86 and 91 to 96 are examples of a plurality of supports of the present invention. The object 130 is an example of an object of the present invention. The process in S30 is an example of a data obtaining step of the present invention. The processes in S47 to S50 are an example of a setting step of the present invention. The process in S51 is an example of a generating step of the present invention. The process in S46 is an example of a specifying step of the present invention. The processes in S31, S32, and S37 are an example of a size obtaining step of the present invention. The process in S45 is an example of a machining allowance adding step of the present invention. The process in S45 is an example of a machining data generating step of the present invention. The process in S48 is an example of an outer frame setting step of the present invention. The process in S53 or S54 is an example of a machining data generating step of the present invention. The CPU 2 that executes the process in S30 is an example of a data obtainer of the present invention. The CPU 2 that executes the processes in S47 to S50 is an example of a setter of the present invention. The CPU 2 that executes the process in S51 is an example of a generator of the present invention. The CPU 2 that executes the process in S31, S32, S37 is an example of a size obtainer of the present invention. The CPU 2 that executes the process in S53 or S54 is an example of a machining allowance data generator of the present invention. The CPU 2 that executes the process in S57 is an example of a machining apparatus data generator of the present invention. The CPU 14 that executes the processes in S24 to S28 is an example of a machining control process of the present invention. The CPU 2 that executes the processes in S45 is an example of a machining allowance adder of the present invention.

The system 9 of the above embodiment includes the data generation apparatus 1 and the 3D printer 11. The CPU 2 of the data generation apparatus 1 executes the following processing according to the object forming data generation program. The CPU 2 obtains three-dimensional data 20 representing the three-dimensional shape of the three-dimensional product 40 (S30). The CPU 2 sets, based on the three-dimensional data 20, supports 81 to 86 and 91 to 96 connected to the three-dimensional product 40, and a support member 100 connected to each of the supports 81 to 86 and 91 to 96, such that the support member 100 is offset to a position outside the three-dimensional product 40 and at which the length of each of the supports 81 to 86 and 91 to 96 in the longitudinal direction (X direction) is a predetermined amount from the outer periphery 60 of the three-dimensional product 40, when viewed from a reference direction intersecting each of the supports 81 to 86 and 91 to 96 (S47 to S50). In the first specific example, the CPU 2 generates three-dimensional object forming data for forming the object 130 including the three-dimensional product 40, the supports 81 to 86 and 91 to 96, and the support member 100 using the 3D printer 11 (S51). The 3D printer 11 forms the object 130 based on the three-dimensional object forming data generated in S51 (S11). The CPU 2 of the data generation apparatus 1 in the system 9 can generate three-dimensional object forming data for forming the object 130, which has smaller variations in the length of the supports 81 to 86 and 91 to 96 between the support member 100 and the three-dimensional product 40, as compared with those in the related art (S51). The CPU 2 of the data generation apparatus 1 thus reduces uneven cuts of the supports 81 to 86 and 91 to 96 caused by variations in deformation and deflection of the supports 81 to 86 and 91 to 96 during cutting as compared with the related art. This makes it easier to cut each of the supports 81 to 86 and 91 to 96 from the three-dimensional product 40, as compared with the related art.

For a flat-shaped object having projections and indentations as in the three-dimensional product 40, the difference in length in the longitudinal direction (X direction) of the generated supports 81 to 86 and 91 to 96 is relatively large. Thus, under the condition where the support member 100 is not set, the variations in deformation and deflection of the supports 81 to 86 and 91 to 96 generated during cutting are relatively large. Therefore, the three-dimensional product 40 may not be cleanly separated from the supports 81 to 86 and 91 to 96, both when the machining apparatus 12 is used and for manually operation using a machining tool such as a nipper. In contrast, in the data generation apparatus 1 of the present embodiment, the lengths of the supports 81 to 86 and 91 to 96 between the three-dimensional product 40 and the supporting member 100 can be made substantially the same. This ensures that the amounts of deformation and deflection of the plurality of supports are substantially uniform, thereby improving the accuracy of neatly separating the three-dimensional product 40 from the supports 81 to 86 and 91 to 96.

The CPU 2 specifies a curved outer periphery 60 of the three-dimensional product 40 when viewed from the reference direction, which is from above (S46). The CPU 2 sets the supporting member 100 offset from the outer periphery 60 specified in S46 to a position outside the three-dimensional product 40 by a predetermined amount (S49, S50). The process in S46 executed by the CPU 2 simplifies specifying the position of the support member 100 to be formed on the XY plane, as compared with when the outer periphery 60 is not specified.

The CPU 2 obtains the size of the machining tool 13 used for cutting the ends of the supports 81 to 86 and 91 to 96, which are connected to the three-dimensional product 40, in the first specific example (S31, S32, and S37). In the first specific example, the CPU 2 sets the support member 100 offset by an amount corresponding to the size of the machining tool 13 obtained (S49, S50). The CPU 2 can set the offset amount appropriately in accordance with the size of the machining tool 13. The CPU 2 can prevent situations where the machining tool 13 is too large to cut each of the supports 81 to 86 and 91 to 96 from the three-dimensional product 40, as compared with the object 130 set based on the data generating apparatus process.

In the second embodiment, the CPU 2 sets the support member 100 offset by an amount corresponding to the range of machining by the machining tool 13 when driven, which is larger than the size of the machining tool 13, based on the object forming data generation program (S49, S50). The CPU 2 can set the offset amount appropriately in accordance with the range of machining by the machining tool 13. The CPU 2 can prevent situations where the range of machining by the machining tool 13 is too large to cut each of the supports 81 to 86 and 91 to 96 from the three-dimensional product 40, as compared with the object 130 set based on the data generating apparatus process.

The CPU 2 sets, based on the three-dimensional data 20, the supports 81 to 86 and 91 to 96 and the support member 100 that is offset outward by a predetermined amount from the outer periphery 60 of the three-dimensional product 40 in a direction perpendicular to the reference direction when viewed from the reference direction (S49). The CPU 2 maintains a constant distance between the support member 100 and the three-dimensional product 40. Furthermore, under the condition that the curing agent is applied to the inside of the support member 100 as in the second specific example of the present embodiment, the amount of the curing agent to be used can be reduced by setting a common predetermined amount (offset amount) in a direction perpendicular to the reference direction based on the size of the machining tool 13 or the driving range of the machining tool 13, as compared with when the length changes in accordance with the direction perpendicular to the reference direction.

The CPU 2 adds a machining allowance 56 of a predetermined thickness to the convex surface 41, which is a surface facing in the reference direction of the three-dimensional product 40 (S45). The CPU 2 generates three-dimensional machining data for machining and removing the right ends of the supports 81 to 86, the left ends of the supports 91 to 96, and the machining allowance 56 from the object 130 of the first specific example, using the machining apparatus 12 (S53, S54). The CPU 2 generates three-dimensional object forming data for forming the object 130 including the three-dimensional product 40, the machining allowance 56, the supports 81 to 86 and 91 to 96, and the support member 100 using the 3D printer 11 (S51). The machining apparatus 12 cuts the ends of the supports 81 to 86 and 91 to 96 in the object 130, which are connected to the three-dimensional product 40, with the machining tool 13 based on the NC data generated in S53 or S54 (S26). The CPU 2 reduces the user's effort in setting the machining allowance 56. Furthermore, when the machining allowance 56 on the surface of the three-dimensional product 61 is machined by the machining apparatus 12 in a state in which the three-dimensional product 61 is supported by the supports 81 to 86 and 91 to 96 without fixing the periphery of the three-dimensional product 61 with a curing agent such as wax as in specific example 1 of the above embodiment, variations in deflection of each of the supports 81 to 86 and 91 to 96 are reduced, to improve the machining accuracy.

The support member 100 set in S49 is a looped frame when viewed from the reference direction. The CPU 2 sets a range of extension of the support member 100 along the reference direction based on the object forming data generation program, such that, in the reference direction, the upstream end of the support member 100, that is, its lower end, is located below the lower end of the three-dimensional product 40 (S50). When the object 130 is fixed to the machining apparatus 12 as in S13, the periphery of the three-dimensional product 40 may be cured with a curing member such as wax. In such a case, the CPU 2 controls the process to apply a curing agent such as wax to the inside of the supporting member 100 and cure the inside of the supporting member 100, and thus the three-dimensional product 40 can be supported with the curing agent. Since the position and shape of the support member 100 are determined based on the outer periphery 60 of the three-dimensional product 40, the CPU 2 reduces the amount of the curing agent to be applied to the inside of the support member 100, as compared with when the support member 100 is set without depending on the outer periphery 60 of the three-dimensional product 40. The CPU 2 prevents the leakage of the curing agent from between the support member 100 and the table of the machining apparatus 12 when the curing agent is applied to the inside of the support member 100. The CPU 2 sets the distance D11 appropriately, thereby preventing the curing agent at the upstream end in the reference direction, that is, at the lower end, from breaking due to insufficient strength, during machining of the three-dimensional product 40 fixed on the machining apparatus 12.

The CPU 2 sets a range of extension of the support member 100 along the reference direction such that, in the reference direction, the downstream end of the support member 100, that is, its upper end, is located above the upper end of the three-dimensional product 40 (S50). The CPU 2 prevents the leakage of the curing agent from the downstream end of the support member 100 in the reference direction, that is, its upper end, when the object 130 is entirely fixed with a curing agent such as wax in order to fix the object 130 to the machining apparatus 12.

The CPU 2 sets a polygonal outer frame 76 for the support member 100 outside the three-dimensional product 40 when viewed from the reference direction (S48). The CPU 2 sets the right ends of the supports 81 to 86 and the left ends of the supports 91to 96 to be connected to the three-dimensional product 40, the left ends of the supports 81 to 86 and the right ends of the supports 91 to 96 to be connected to the outer frame 76, and portions of the supports 81 to 86 and 91 to 96 between their left and right ends to be connected to the support member 100 (S47 to S50). In the first specific example, the CPU 2 generates three-dimensional object forming data for forming the object 130 including the outer frame 76 in addition to the three-dimensional product 40, the supports 81 to 86 and 91 to 96, and the support member 100, using the 3D printer 11 (S51). The CPU 2 sets the outer frame 76, thereby improving the ease of positioning the object 130 relative to the machining apparatus 12.

In each of the first and second specific examples, the CPU 2 sets the machining exclusion range 110, thereby generating three-dimensional machining data including information in which an area between the support member 100 and the outer frame 76, when viewed from the reference direction, is excluded from a range to be machined with the machining apparatus 12 (S53, S54). In each of the first and second specific examples, the CPU 2 generates three-dimensional object forming data for forming the object 130 including the three-dimensional product 40, the supports 81 to 86 and 91 to 96, the support member 100, and the outer frame 76, using the 3D printer 11 (S51). The CPU 2 sets the machining exclusion range 110, thereby reducing the amount of machining of the supports 81 to 86 and 91 to 96 using the machining apparatus 12 and shortening the machining time, as compared with when no machining exclusion range 110 is provided. The CPU 2 of the present embodiment can set the machining exclusion range 110 without expanding the range of extension of an object, as the machining exclusion range 110 is set only for the three-dimensional machining data and not for the three-dimensional object forming data.

In the first specific example, the CPU 2 generates three-dimensional machining data representing the three-dimensional shape of the object 131 to be formed after the machining allowance 56 in the object 130 is machined and removed with the machining apparatus 12 (S54). The CPU 2 generates NC data including a plurality of movement coordinates of the machining tool 13 that specify a tool path for machining and removing the machining allowance 56 of the object 130 with the machining tool 13, which is driven by the machining apparatus 12 (S57). In the second specific example, the CPU 2 generates three-dimensional machining data representing the three-dimensional shape of the object 132 to be formed after the machining allowance 56, the right ends of the supports 81 to 86, and the left ends of the supports 91 to 96 in the object 130 are machined and removed with the machining apparatus 12 (S53). The CPU 2 generates NC data including a plurality of movement coordinates of the machining tool 13 that specify a tool path for machining and removing the machining allowance 56 and ends of the supports 81 to 86 and 91 to 96 connected to the three-dimensional product 40 in the object 130 with the machining tool 13, which is driven by the machining apparatus 12 (S57). In the first specific example, the machining apparatus 12 machines the machining allowance 56 in the object 130 based on the NC data. In the second specific example, the machining apparatus 12 machines both the machining allowance 56 and the ends of the supports 81 to 86 and 91 to 96, which are connected to the three-dimensional product 40, in the object 130, based on the NC data. Specifically, in each of the first and second specific examples, the machining apparatus 12 sequentially reads a plurality of movement coordinates included in the NC data (S24). When the machining apparatus 12 moves to a movement coordinate of interest and is determined to machine the three-dimensional product 40 based on the three-dimensional machining data and the size of the machining tool 13 or an amount corresponding to a range of machining by the machining tool 13 (S25: YES), the machining apparatus 12 does not machine the portion of interest corresponding to the movement coordinate of interest (S27). When the machining apparatus 12 is determined not to machine the three-dimensional product 40 (S25: NO), the machining apparatus 12 moves the machining tool 13 to the movement coordinate of interest and machines the portion of interest (S26). The system 9 including the machining apparatus 12 can reliably prevent the three-dimensional product 40 from being machined when the object 130, formed by the 3D printer 11, is machined based on the NC data.

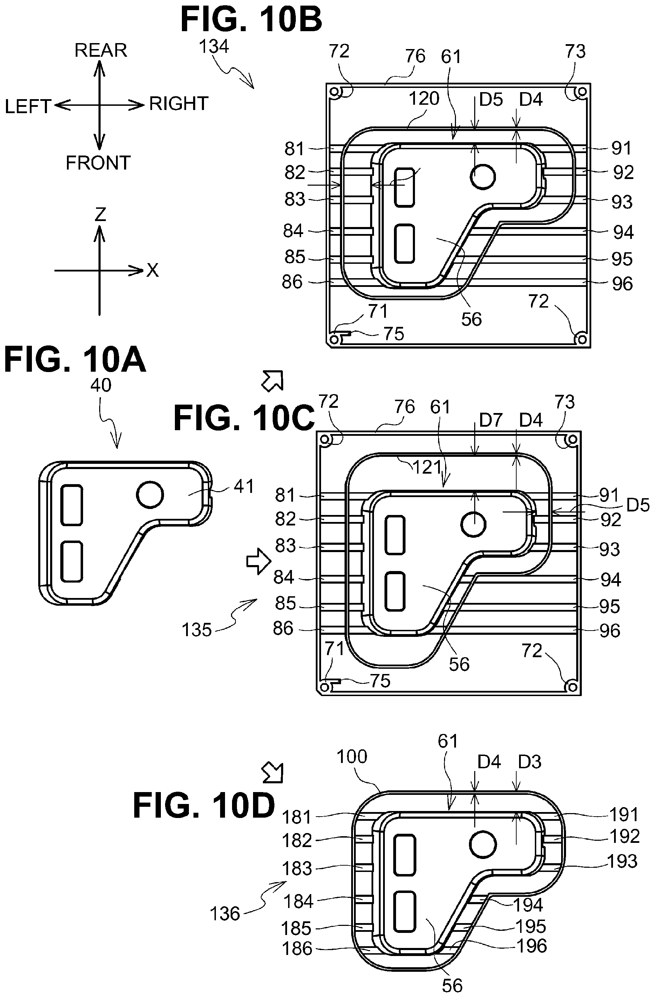

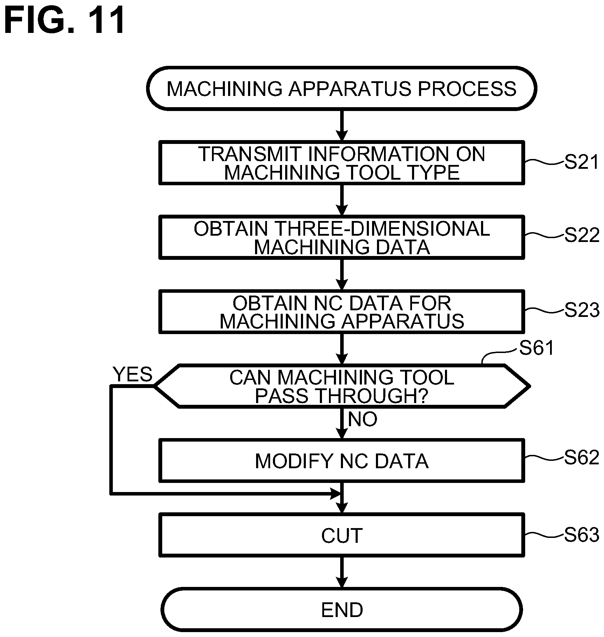

The three-dimensional object forming system and the object forming data generating program of the present invention are not limited to the above-described embodiments, and various modifications may be made without departing from the scope of the present invention. For example, the following modifications may be added as appropriate. The three-dimensional object forming data generation program and the three-dimensional object forming system may be implemented in different categories, for example, as a computer-readable medium having the object forming data generation program recorded thereon, a data generation apparatus, and an object forming data generation method. In FIGS. 10A to 10D, the same reference numerals are given to the same components as those of the three-dimensional product 40 and the object 130 of the specific examples of the above-described embodiment. In FIG. 11, the same step numbers are assigned to the same processes as those in FIG. 2.

The configurations of the data generation apparatus 1 and the system 9 may be changed as appropriate. The data generation apparatus 1 may be a dedicated apparatus or a general-purpose apparatus that can generate three-dimensional object forming data based on three-dimensional data representing a three-dimensional product. The system 9 may be provided with the 3D printer 11 and the machining apparatus 12 only, and the data generation process may be executed by a controller of at least one of the 3D printer 11 and the machining apparatus 12. The system 9 may omit the machining apparatus 12.

(B) The program including instructions for executing the data generation apparatus process in FIG. 2 may be stored in the storage of the data generation apparatus 1 before the CPU 2 executes the program. Similarly, the program including the command for executing the 3D printer process may be stored in the storage of the 3D printer 11 before the controller of the 3D printer 11 executes the program. The program including the instructions for executing the machining apparatus process may be stored in the storage of the machining apparatus 12 before the CPU 14 executes the program. The method of obtaining the program, the path of obtaining the program, and the device storing the program may be changed as appropriate. The programs executed by the CPU 2 and the CPU 14 may be received from other devices via a cable or wireless communication and stored in a storage device such as a flash memory. The other devices include, for example, a PC and a server connected via a network.

(C) The steps of the processes executed by the system 9 are not limited to those executed by the CPU 2 of the data generation apparatus 1, the controller of the 3D printer 11, and the CPU 14 of the machining apparatus 12, and a part or all of the process to be executed by the system 9 may be executed by another electronic device (for example, an ASIC) included in the system 9. Each step of the data generation process may be distributed by a plurality of electronic devices (for example, a plurality of CPUs). The order of the steps in the data generation process can be changed, the steps can be omitted, and new steps can be added as necessary. An aspect in which an operating system (OS) or any similar software running on the data generation apparatus 1 performs a part or all of the data generating process based on a command from the CPU 2 is also included in the scope of the present disclosure. For example, the following changes may be added as appropriate.

The ends of the supports 81 to 86 and 91 to 96 connected to the three-dimensional product 40 may be cut using the machining tool 13 or may be manually cut by the user using a tool such as a nipper. When the user cuts the ends of the supports 81 to 86 and 91 to 96 connected to the three-dimensional product 40, the system 9 may not include the machining apparatus 12. The machining apparatus 12 may machine the object 130 by using a plurality of types of machining tools 13. In this case, the offset amount may be set for each corresponding cutting portion in accordance with the size or range of machining by the machining tool 13 to be used. The items that can be set on the setting screen 30 displayed in S31 may be changed as appropriate. The CPU 2 may not set the initial value for at least one of the sections 33 to 35 in S31. In this case, if any of the sections 33 to 35 has an unset item in S33, the CPU 2 may display a warning or a message prompting an input for the unset item and return the process to S33, or may automatically set an initial value for the unset item.

The method of setting the plurality of supports may be changed as appropriate. The shape, longitudinal direction, height, width, and intervals of the plurality of supports may be the same or different from each other. Thus, for example, the plurality of supports may extend radially from the three-dimensional product 40. The plurality of supports may be set by being extended from the convex surface 41 of the three-dimensional product 40 in the longitudinal direction for a predetermined length. That is, the CPU 2 may set at least a part of the plurality of supports without specifying the outer periphery 60 of the three-dimensional product 40. In this case, the position of the support member 100 on the XY plane may be set by connecting the ends of the supports without specifying the outer periphery 60 of the three-dimensional product 40. The plurality of supports may not be adjacent to the outer periphery 60 of the three-dimensional product 40. The CPU 2 may omit at least one of the processes in S43 to S46 and S48. For example, when the process in S48, where the outer frame 76 is set, is omitted, the CPU 2 may set, in S47 and S50, supports 181 to 186 and 191 to 196 and a support member 100, as in an object 136 of the third modification shown in FIG. 10D, such that the supports 181 to 186 and 191 to 196 each extend in the longitudinal direction by the length D3 as an offset amount from the same three-dimensional product 40 as the specific example shown in FIG. 10A, in a direction perpendicular to the reference direction. When the process in S48 is not omitted, the shape of the outer frame 76 surrounding the three-dimensional product 40 may be appropriately changed. The outer frame 76 may be provided outside the three-dimensional product 40 in a polygonal shape such as a triangular shape, a trapezoidal shape, or a hexagonal shape, a circular shape, or elliptical shape when viewed from the reference direction. When the outer frame 76 is rectangular, the extending direction of each side when viewed from the reference direction may be changed as appropriate.

The support member 100 has a cylindrical shape having a plane parallel to the Z direction, but may have a bottomed cylindrical shape or a cylindrical shape having a plane intersecting the Z direction. S13 may be automatically executed in the 3D printer 11 or the machining apparatus 12, or may be omitted as necessary. When S13 is omitted, the support member 100 may not have a looped shape when viewed from the reference direction, and may have a shape like, for example, a curved plate extending in the Y direction orthogonal to each of the supports 81 to 86 and 91 to 96 or in the direction intersecting each of the supports 81 to 86 and 91 to 96. The conditions for setting the support member 100 based on the three-dimensional product 40 may be changed as appropriate. The offset amount (which is a predetermined amount) from the outer periphery 60 may include a condition for setting the position of the support member 100 to be formed with different offset amounts in the X direction and the Y direction. In this case, in S50, the CPU 2 may set a support member 120 having a looped shape in plan view, as in an object 134 of the first modification shown in FIG. 10B, such as to be offset from the three-dimensional product 40 as in the specific example shown in FIG. 10A by a length D7 as an offset amount in the X direction, and by a length D5 as an offset amount in the Y direction. The length D7 is longer than the length D5. Similarly, in S50, the CPU 2 may set a support member 121 having a looped shape in plan view, as in an object 135 of the second modification shown in FIG. 10C, such as to be offset from the three-dimensional product 40 by the length D5 as an offset amount in the X direction and by the length D7 as the offset amount in the Y direction. At least one of the upper end periphery and the lower end periphery of the support member 100 may not extend horizontally. In the vertical direction, that is, in the Z direction, the upper end of the support member 100 may be at the same level as or lower than the upper end of the three-dimensional product 40. In the vertical direction, that is, in the Z direction, the lower end of the support member 100 may be at the same level as or higher than the lower end of the three-dimensional product 40. At least a part of the supports 81 to 86 and 91 to 96 may be set after the support member 100 is set.

The method of setting the machining exclusion range 110 may be changed as appropriate. The CPU 2 may generate three-dimensional machining data without setting the machining exclusion range 110. In this case, for example, the area between the three-dimensional product 40 and the outer frame 76 may be cut when viewed from the reference direction. The machining exclusion range 110 may also be set in the three-dimensional object forming data. As shown in an object 140 of FIG. 9D, the CPU 2 may set a plate-shaped machining exclusion range 210 that connects the upper end of the outer frame 76 and the upper end of the supporting member 100 in the process in S53 or S54, in place of the machining exclusion range 110. When viewed from the reference direction, the plurality of supports between the support member 100 and the three-dimensional product 40 and the plurality of supports between the support member 100 and the outer frame 76 may not be in line with each other, and may be different in number from each other.

At least one of the processes in S52 to S57 may be omitted, or may be executed by the machining apparatus 12 instead of the data generation apparatus 1. For example, the CPU 2 of the data generation apparatus 1 may execute the process in S53 or S54, and output the generated three-dimensional object forming data and three-dimensional machining data to the machining apparatus 12. The machining apparatus 12 may execute the processes in S56 and S57 based on the three-dimensional object forming data and three-dimensional machining data output from the data generation apparatus 1. The CPU 14 of the machining apparatus 12 may skip the processes in S25 and S27, and move the machining tool 13 based on the movement coordinate of interest obtained in S24, to machine the portion of interest corresponding to the movement coordinate of interest. The CPU 14 of the machining apparatus 12 may perform the processes in S61 to S63 in FIG. 11 instead of the processes in S24 to S28. In S61, the CPU 14 determines whether the machining tool 13 can pass through the object 130, which is formed by the 3D printer 11, during machining based on the NC data obtained in S23. When the CPU 14 drives the machining tool 13 along the tool path indicated by the NC data, and neither the object 131 nor the object 132, which is represented by the three-dimensional machining data, is machined, the CPU 14 determines that the machining tool 13 can pass through. When the machining tool 13 can pass through (S61: YES), the CPU 14 machines the object 130 based on the NC data obtained in S23 to cut out the three-dimensional product 40 (S63). When the CPU 2 drives the machining tool 13 along the tool path indicated by the NC data, and at least part of the object 132, which is represented by the three-dimensional machining data, is machined, the CPU 2 determines that the machining tool 13 cannot pass through. When the machining tool 13 cannot pass through (S61: NO), the CPU 14 modifies the NC data so as to stop machining the portion where the machining tool 13 cannot pass through (S62). The CPU 14 machines the object 130 based on the NC data modified in S62 to cut out the three-dimensional product 40 (S63). The machining apparatus 12 ends the machining apparatus process. In this case, the determination of whether the machining tool 13 can pass through and the machining process based on the NC data can be separated.

### Reference Signs List

- 1:: Data generation apparatus 2: CPU
- 3:: ROM
- 4:: RAM
- 5:: Storage
- 7:: Display
- 8:: Operation unit
- 9:: Three-dimensional object forming system
- 10:: Bus
- 11:: 3D printer
- 12:: Machining apparatus
- 13:: Machining tool

## Claims

1. An object forming data generation program including instructions to cause a controller of a computer to perform operations comprising:
a data obtaining step of obtaining three-dimensional data representing a three-dimensional shape of a three-dimensional product;
s setting step of setting, based on the three-dimensional data, a plurality of supports to be connected to the three-dimensional product and a support member to be connected to each of the plurality of supports, such that, when viewed from a reference direction intersecting each of the plurality of supports, the support member is offset to a position outside the three-dimensional product and at which a length of each of the plurality of supports in a longitudinal direction thereof is a predetermined amount from an outer periphery of the three-dimensional product; and
a generating step of generating three-dimensional object forming data for forming an object including the three-dimensional product, the plurality of supports, and the support member, using a three-dimensional object forming apparatus.

2. The object forming data generation program according to claim 1, wherein
the operations further comprise a specifying step of specifying the outer periphery of the three-dimensional product when viewed from the reference direction, and
the controller sets, in the setting step, the support member that is offset by the predetermined amount from the outer periphery of the three-dimensional product, which is set in the specifying step, to the position outside the three-dimensional product.

3. The object forming data generation program according to claim 2, wherein
the operation further comprise a size obtaining step of obtaining the size of a machining tool used for cutting an end of each of the plurality of supports connected to the three-dimensional product, and
the controller sets, in the setting step, the support member that is offset by an amount corresponding to the size of the machining tool obtained in the size obtaining step.

4. The object forming data generation program according to claim 3, wherein the controller sets the support member offset by an amount corresponding to a range of machining by the machining tool when driven.

5. The object forming data generation program according to claim 2, wherein the controller sets, in the setting step, the support member that is offset by the predetermined amount from the outer periphery of the three-dimensional product, outside the three-dimensional product, in a direction perpendicular to the reference direction, when viewed from the reference direction.

6. The object forming data generation program according to any one of claims 1 to 5, wherein
the operations further comprise
a machining allowance adding step of adding a machining allowance of a predetermined thickness to a surface to be machined of the three-dimensional product when viewed from the reference direction,
a machining data generating step of generating three-dimensional machining data that represents a three-dimensional shape of the object after at least the machining allowance is cut and removed from the object with a machining apparatus, and
the controller generates, in the generating step, generates three-dimensional object forming data for forming an object including the three-dimensional product, the machining allowance, the plurality of supports, and the support member, using the three-dimensional object forming apparatus.

7. The object forming data generation program according to any one of claims 1 to 5, wherein
the support member is an annular frame when viewed from the reference direction, and
the controller sets, in the setting step, a range of extension of the support member along the reference direction, such that, in the reference direction, an upstream end of the support member is located upstream of an upstream end of the three-dimensional product.

8. The object forming data generation program according to claim 7, wherein the controller sets, in the setting step, the range of extension of the support member along the reference direction, such that, in the reference direction, a downstream end of the support member is located downstream of a downstream end of the three-dimensional product.

9. The object forming data generation program according to any one of claims 1 to 5, wherein
the operations further comprise an outer frame setting step of setting an outer frame in a polygonal shape for the support member outside the three-dimensional product when viewed from the reference direction,
the controller sets, in the setting step, a first end of each of the plurality of supports to be connected to the three-dimensional product, a second end thereof to be connected to the outer frame, and a portion of each of plurality of supports between the first end and the second end to be connected to the support member, and
the controller generates, in the generating step, the three-dimensional object forming data for forming the object including the outer frame in addition to the three-dimensional product, the plurality of supports, and the support member, using the three-dimensional object forming apparatus.

10. The object forming data generation program according to claim 6, wherein
the operations further comprise an outer frame setting step of setting an outer frame in a polygonal shape for the support member outside the three-dimensional product when viewed from the reference direction,
the controller generates, in the generating step, the three-dimensional object forming data for forming the object including the outer frame in addition to the three-dimensional product, the plurality of supports, and the support member, using the three-dimensional object forming apparatus, and
the controller generates, in the machining data generating step, the three-dimensional machining data that includes information in which an area between the support member and the outer frame, when viewed from the reference direction, is excluded from a range to be machined by the machining apparatus.

11. A three-dimensional object forming system, comprising:
a data obtainer configured to obtain three-dimensional data representing a three-dimensional shape of a three-dimensional product;
a setter configured to set, based on the three-dimensional data, a plurality of supports to be connected to the three-dimensional product and a support member to be connected to each of the plurality of supports, such that, when viewed from a reference direction intersecting each of the plurality of supports, the support member is offset to a position outside the three-dimensional product and at which a length of each of the plurality of supports in a longitudinal direction thereof is a predetermined amount from an outer periphery of the three-dimensional product; and
a generator configured to generate three-dimensional object forming data for forming an object including the three-dimensional product, the plurality of supports, and the support member, using a three-dimensional object forming apparatus.
